(19) Europäisches Patentamt
European Patent Office
Office européen des brevets

(11) Veröffentlichungsnummer: **0 379 872 A1**

# (12) EUROPÄISCHE PATENTANMELDUNG

(21) Anmeldenummer: **90100246.9**

(22) Anmeldetag: **06.01.90**

(51) Int. Cl.5: **C09B 29/085, D06P 1/04, C09B 67/22**

(30) Priorität: **21.01.89 DE 3901724**

(43) Veröffentlichungstag der Anmeldung:
**01.08.90 Patentblatt 90/31**

(84) Benannte Vertragsstaaten:
**DE FR GB IT**

(71) Anmelder: **BAYER AG**
**D-5090 Leverkusen 1 Bayerwerk(DE)**

(72) Erfinder: **Jordan, Heinz Dietrich, Dr.**
**Kurt-Schumacher-Ring 69a**
**D-5090 Leverkusen 1(DE)**
Erfinder: **Hoppe, Manfred, Dr.**
**Kölner Strassse 233**
**D-5067 Kürten(DE)**

## (54) Verfahren zum Färben von synthetischen Fasermaterialien.

(57) Azoverbindungen der Formel

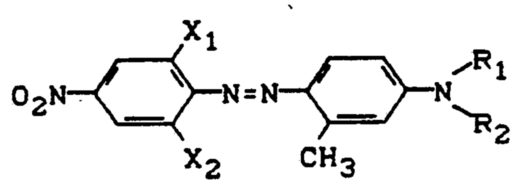

(I)

worin
$X_1$ / $X_2$ = Cl oder Br,
$R_1$ / $R_2$ = $C_1$-$C_6$-Alkyl, Phenyl-$C_1$-$C_3$-alkyl, $C_2H_4COOC_1$-$C_4$-Alkyl, $C_1$-$C_4$-Alkoxy-$C_2$-$C_4$-alkyl oder Phenoxy-$C_1$-$C_3$-alkyl bedeuten,
die bislang nur als Ausgangsmaterialien zur Herstellung von Dispensionfarbstoffen bekannt waren, haben sich als wertvolle Farbstoffe zum Färben von Polyesterfasern erwiesen.

EP 0 379 872 A1

# Verfahren zum Färben von synthetischen Fasermaterialien

Gegenstand der Erfindung ist ein Verfahren zum Färben und Bedrucken von synthetischen Fasermaterialien.

Das Verfahren ist dadurch gekennzeichnet, daß man Azoverbindungen der Formel

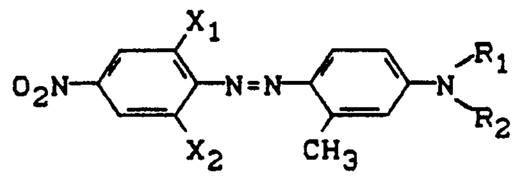

(I)

verwendet,
worin - unabhängig voneinander -
$X_1$ / $X_2$ = Cl oder Br,
$R_1$ / $R_2$ = $C_1$-$C_6$-Alkyl, Phenyl-$C_1$-$C_3$-alkyl, $C_2H_4COOC_1$-$C_4$-Alkyl, $C_1$-$C_4$-Alkoxy-$C_2$-$C_4$-alkyl oder Phenoxy-$C_1$-$C_3$-alkyl bedeuten.

Besonders geeignete Alkylreste sind Methyl, Ethyl, n-und i-Propyl sowie n-Butyl.

Vorzugsweise ist $X_1$ = $X_2$ = Br.

Die Verbindungen der Formel (I) sind z.T. bekannt (vgl. US-A 3 962 209) bzw. nach an sich bekannten Verfahren leicht zugänglich, indem man p-Nitroanilin in mineralsaurem Medium dihalogeniert, das erhaltene 2,6-Dihalogen-4-nitroanilin diazotiert und auf entsprechende Aniline kuppelt.

Die Azoverbindungen (I) wurden jedoch bislang lediglich als Ausgangsmaterialien zur Herstellung von blauen 2,6-Dicycanoazofarbstoffen verwendet (vgl. o.g. US-Patentschrift).

Es wurde nun gefunden, daß sich diese Verbindungen auch sehr gut zum Färben von synthetischen, hydrophoben Fasermaterialien nach üblichen Methoden eignen, wie z.B. Carrier-, HT- und Thermosolverfahren, eignen.

Das gilt insbesondere für die bevorzugten Verbindungen der Formel I mit
$X_1$ = $X_2$ = Br,
$R_1$ = $C_2$-$C_4$-Alkyl und
$R_2$ = $R_1$, Phenyl-$C_1$-$C_3$-alkyl oder Phenoxy-$C_1$-$C_3$-alkyl.

Bevorzugte Fasermaterialien sind Celluloseester und vor allem aromatische Polyester, sowie deren Mischungen mit Cellulosefasern oder Wolle.

Ausgewählte Verbindungen der Formel I eignen sich auch für den textilen und nicht-textilen Sublimationstransferdruck.

Die Farbstoffe sind sehr preiswert und ergeben auf den genannten Fasermaterialien kräftige rotbraune bzw. gelbbraune Färbungen.

Sie zeichnen sich bei mittlerem bis gutem Echtheitsniveau gegenüber handelsüblichen Farbstoffen dieser Nuancen durch ihre pH-Stabilität aus.

Hervorzuheben ist die Eignung der erfindungsgemäß zu verwendenden Farbstoffe für Schwarzmischungen.

Geeignete Mischungskomponenten sind beispielsweise u.a.

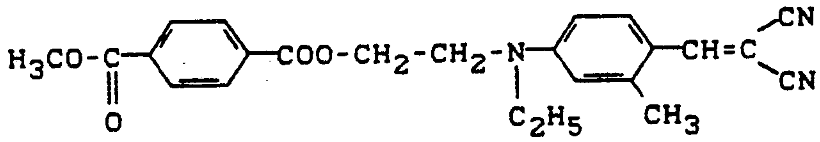

(A): gelb

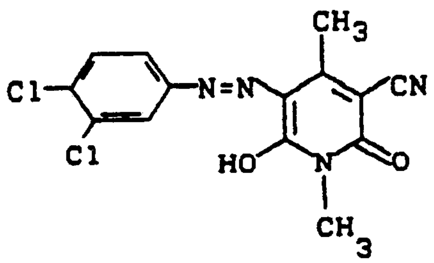

(B): gelb

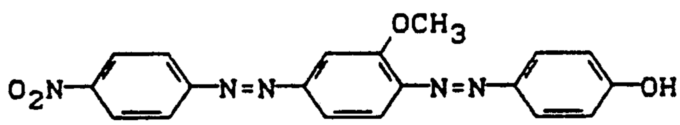

(C): orange

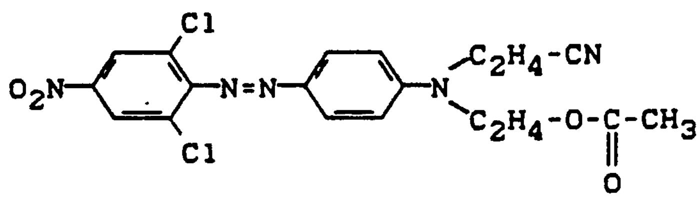

(D): orange

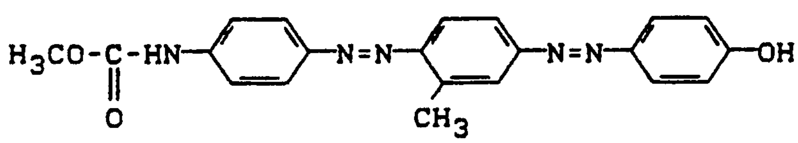

(E): orange

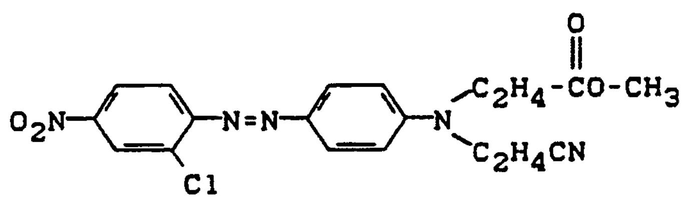

(F): rot

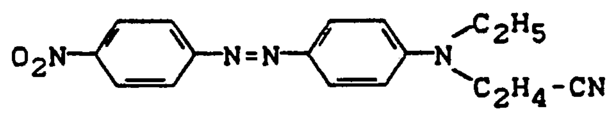

(G): orange

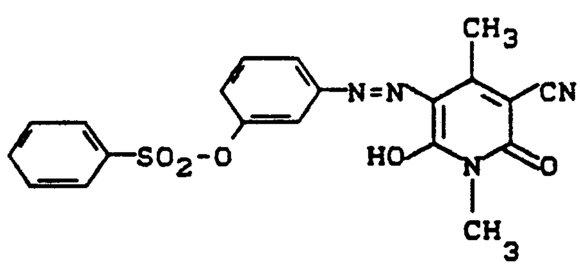

(H): gelb

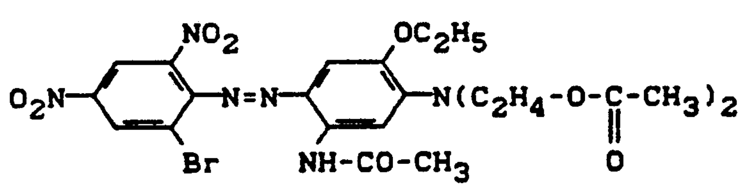

(J): blau

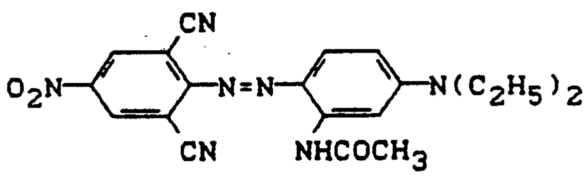

(K): blau

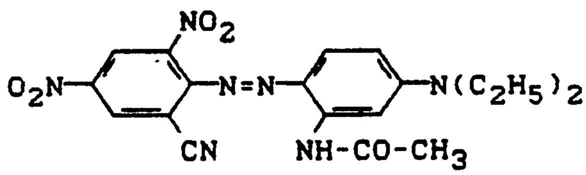

(L): blau

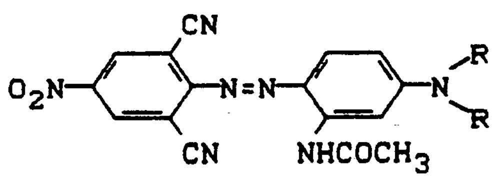

50 % R = $C_2H_5$
50 % R = $C_3H_7$

(M): blau

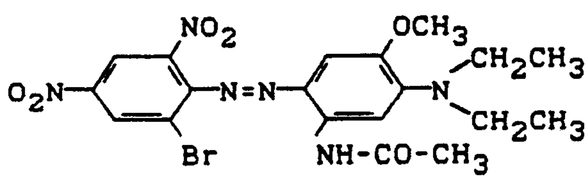

(N): blau

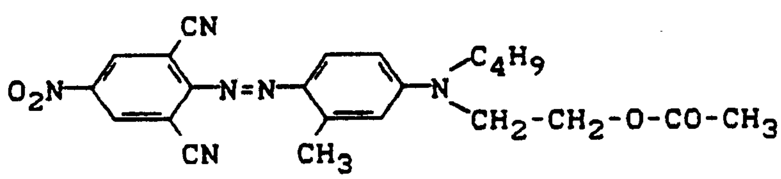

(O): blau

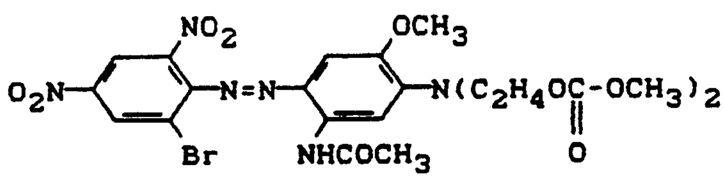

(P): blau

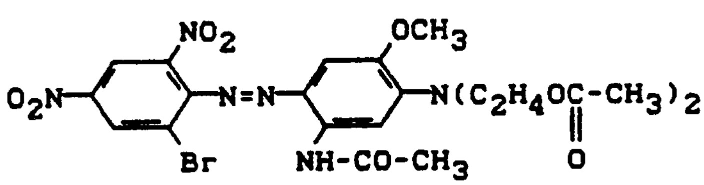

(Q): blau

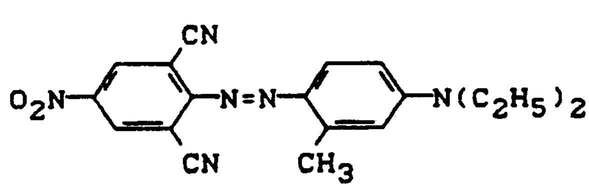

(R) : blau

Die obengenannten Mischungen enthalten mindestens einen der erfindungsgemäßen Farbstoffe, mindestens einen Blaufarbstoff und gegebenenfalls einen oder mehrere Farbstoffe aus der Gelb- bis Rotreihe, sowie eventuell auch Nuancierungsfarbstoffe.

Bevorzugte Mischungen sind solche, die je 10 bis 60 Gew.-% eines Farbstoffs der Formel I enthalten. Besonders bevorzugte Schwarzmischungen enthalten 15 bis 50, insbesondere 20 bis 45 Gew.-% des Farbstoffs I.

Geeignete Nuancierungsfarbstoffe sind handelsübliche Dispersionsfarbstoffe, wie sie z.B. in der oben aufgeführten Formelliste genannt sind.

Die in den nachfolgenden Beispielen angegebenen Prozentzahlen beziehen sich auf das Warengewicht.

Beispiel 1

Ein Polyestergewebe wird bei 40-50° C und einem Flottenverhältnis von 1:20 in ein Färbebad eingebracht, das 0,65 % des Farbstoffs der Formel I, worin $R_1 = R_2 = C_2H_5$ und $X_1 = X_2 =$ Br bedeuten, in fein verteilter und durch Dispergiermittelzusatz stabilisierter Form enthält.

Bei pH 4-5 wird langsam erwärmt und ca. 60 Minuten unter Druck bei 130° C gefärbt. Nach dem Spülen, Seifen, Spülen und Trocknen erhält man eine kräftige rotbraune Färbung.

Beispiel 2

Verfährt man wie in Beispiel 1 angegeben, ersetzt aber den dort verwendeten Farbstoff durch die gleiche Menge des Farbstoffs der Formel I, worin $R_1 = C_4H_9$-n, $X_1 = X_2 =$ Br, $R_2 = CH_2CH_2OCH_3$ bedeuten, so erhält man eine kräftige gelbbraune Färbung.

Beispiel 3

Ersetzt man in Beispiel 1 den dort angegebenen Farbstoff durch 0,65 % des Farbstoffes der Formel I, worin $R_1 = C_2H_5$,

$R_2 = CH_2CH_2O$ 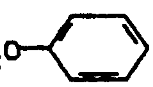

und $X_1 = X_2 =$ Br bedeuten, so erhält man eine Färbung gleicher Stärke.

Beispiel 4

Ersetzt man in Beispiel 1 den dort angegebenen Farbstoff durch 0,55 % des Farbstoffes der Formel I, worin $R_1 = C_2H_5$,

$R_2 = CH_2CH_2CH_2$ 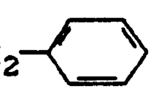

und $X_1 = X_2 =$ Cl bedeuten, so erhält man eine gleichstarke Färbung, die eine Spur klarer ist.

Beispiel 5

Ein Polyestergewebe wird wie in Beispiel 1 angegeben mit einer Farbstoffmischung gefärbt, wobei das Bad 0,58 % des in Beispiel 1 genannten Farbstoffs sowie 0,90 % des blauen Farbstoffs J und 0,18 % des Farbstoffs B enthält. Man erhält eine satte Schwarzfärbung.

Beispiel 6

Ein Polyestergewebe wird in ein Färbebad eingebracht, das 0,41 % des Farbstoffs gemäß Beispiel 1, 0,96 % des Farbstoffs P und 0,36 % des Farbstoffs C enthält. Man färbt wie in Beispiel 1 angegeben und erhält eine tiefe Schwarzfärbung.

Beispiel 7

Ein Polyestergewebe wird in ein Färbebad eingebracht, das 0,64% des Farbstoffes gemäß Beispiel 2, 0,27 % des Farbstoffes C und 0,96 % des Farbstoffs J enthält. Man färbt wie in Beispiel 1 angegeben und erhält eine tiefe Schwarzfärbung.

Beispiel 8

Ein Polyestergewebe wird in ein Färbebad eingebracht, das 0,85 % des Farbstoffs gemäß Beispiel 2, 0,13 % des Farbstoffs B und 0,90 % des Farbstoffes J enthält. Man färbt wie in Beispiel 1 angegeben und erhält eine tiefe Schwarzfärbung.

**Ansprüche**

1. Verfahren zum Färben und Bedrucken von synthetischen Fasermaterialien, dadurch gekennzeichnet, daß man Farbstoffe der Formel

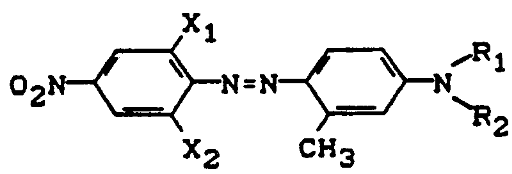

(I).

verwendet,
worin - unabhängig voneinander -
$X_1$ / $X_2$ = Cl oder Br,
$R_1$ / $R_2$ = $C_1$-$C_6$-Alkyl, Phenyl-$C_1$-$C_3$-alkyl, $C_2H_4COOC_1$-$C_4$-Alkyl, $C_1$-$C_4$-Alkoxy-$C_2$-$C_4$-alkyl oder Phenoxy-$C_1$-$C_3$-alkyl bedeuten.

2. Verfahren nach Anspruch 1, dadurch gekennzeichnet, daß man Farbstoffe der angegebenen Formel verwendet, worin
$X_1$ = $X_2$ = Br,
$R_1$ = $C_2$-$C_4$-Alkyl und
$R_2$ = $R_1$, Phenyl-$C_1$-$C_3$-alkyl oder Phenoxy-$C_1$-$C_3$-alkyl bedeuten.

3. Verfahren nach Anspruch 1, dadurch gekennzeichnet, daß man den Farbstoff der Formel

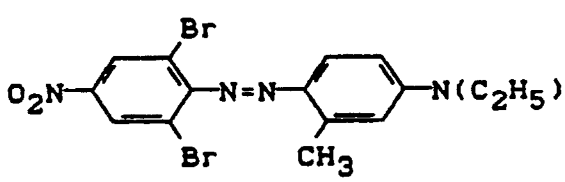

verwendet.

4. Verfahren nach Anspruch 1, dadurch gekennzeichnet, daß man den Farbstoff der Formel

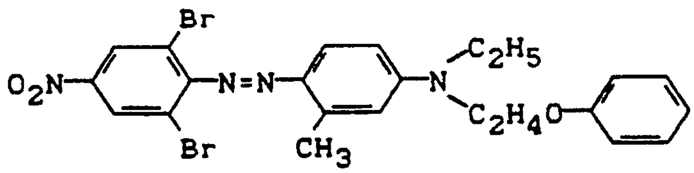

verwendet.

5. Verfahren nach Anspruch 1, dadurch gekennzeichnet, daß man den Farbstoff der Formel

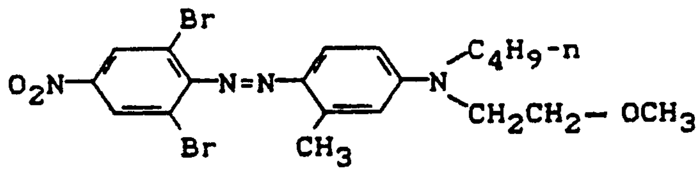

verwendet.

6. Farbstoffmischungen für Schwarzfärbungen, enthaltend 10 bis 60 Gew.- % eines Farbstoffs der Formel I mit den in Anspruch 1 angegebenen Bedeutungen.

Europäisches Patentamt

# EUROPÄISCHER RECHERCHENBERICHT

Nummer der Anmeldung

EP 90100246.9

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int Cl 5) |
|---|---|---|---|
| X | CH - A5 - 660 746 (SANDOZ AG) * Seite 2, rechte Spalte, Zeile 41 - Seite 3; linke Spalte, Zeile 61 * | 1,2 | C 09 B 29/085<br>D 06 P 1/04<br>C 09 B 67/22 |
| A | -- | 4 | |
| X | PATENT ABSTRACTS OF JAPAN, unexamined applications, C Field, Band 7, Nr. 281, 15. Dezember 1983 THE PATENT OFFICE JAPANESE GOVERNMENT Seite 97 C 200 * Kokai-Nr. 58-160 356 (SUMITOMO KAGAKU KOGYO K.K.) * -- | 1-3 | |
| A | DE - A1 - 2 936 489 (SANDOZ-PATENT-GMBH) * Ansprüche 1-3 * ---- | 1,6 | |

| RECHERCHIERTE SACHGEBIETE (Int Cl 5) |
|---|
| C 09 B<br>D 06 P |

Der vorliegende Recherchenbericht wurde für alle Patentansprüche erstellt

| Recherchenort | Abschlußdatum der Recherche | Prüfer |
|---|---|---|
| WIEN | 10-04-1990 | HAUSWIRTH |

KATEGORIE DER GENANNTEN DOKUMENTEN

- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument